(19) Europäisches Patentamt / European Patent Office / Office européen des brevets

(11) **EP 3 391 479 B1**

(12) **EUROPÄISCHE PATENTSCHRIFT**

(45) Veröffentlichungstag und Bekanntmachung des Hinweises auf die Patenterteilung:
**07.09.2022  Patentblatt 2022/36**

(21) Anmeldenummer: **15813338.9**

(22) Anmeldetag: **15.12.2015**

(51) Internationale Patentklassifikation (IPC):
**H01S 3/00** (2006.01)        **G02B 27/09** (2006.01)
**H05G 2/00** (2006.01)        H01S 3/223 (2006.01)
H01S 3/23 (2006.01)

(52) Gemeinsame Patentklassifikation (CPC):
**H01S 3/0064; G02B 27/0988; H05G 2/008;**
H01S 3/005; H01S 3/2232; H01S 3/2316

(86) Internationale Anmeldenummer:
**PCT/EP2015/079799**

(87) Internationale Veröffentlichungsnummer:
**WO 2017/101982 (22.06.2017 Gazette 2017/25)**

(54) **OPTISCHER ISOLATOR, TREIBERLASERANORDNUNG UND EUV-STRAHLUNGSERZEUGUNGSVORRICHTUNG DAMIT**

OPTICAL ISOLATOR, DRIVER LASER ARRANGEMENT AND EUV RADIATION PRODUCTION APPARATUS THEREWITH

ISOLATEUR OPTIQUE, DISPOSITIF DE LASER D'ATTAQUE ET DISPOSITIF DE GÉNÉRATION DE RAYONNEMENT UVE COMPRENANT LEDIT ISOLATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.10.2018  Patentblatt 2018/43**

(73) Patentinhaber: **TRUMPF Lasersystems for Semiconductor Manufacturing GmbH 71254 Ditzingen (DE)**

(72) Erfinder: **BRUNNE, Jens 70180 Stuttgart (DE)**

(74) Vertreter: **Kohler Schmid Möbus Patentanwälte Partnerschaftsgesellschaft mbB Gropiusplatz 10 70563 Stuttgart (DE)**

(56) Entgegenhaltungen:
US-A- 4 194 813

- FIGUEIRA J F ET AL: "PLASMA-BREAKDOWN RETROPULSE ISOLATORS FOR THE INFRARED", APPLIED OPTICS, OPTICAL SOCIETY OF AMERICA, WASHINGTON, DC; US, Bd. 20, Nr. 5, 1. März 1981 (1981-03-01), Seiten 838-841, XP000708968, ISSN: 0003-6935, DOI: 10.1364/AO.20.000838
- SHEHEEN T W ET AL: "LASER-INITIATED VACUUM PLASMA SHUTTERS USING A DIELECTRIC APERTURE FOR RETROPULSE ISOLATION", JOURNAL OF APPLIED PHYSICS, AMERICAN INSTITUTE OF PHYSICS, US, Bd. 53, Nr. 7, 1. Juli 1982 (1982-07-01), Seiten 4652-4656, XP000707211, ISSN: 0021-8979, DOI: 10.1063/1.331292
- KALIN A W ET AL: "IMPROVED PLASMA SHUTTER FOR 50 PS OPTICAL FREE INDUCTION DECAY (OFID) 10 UM CO2 LASERS", INTERNATIONAL JOURNAL OF INFRARED AND MILLIMETER WAVES, SPRINGER, DORDRECHT, NL, Bd. 11, Nr. 1, 1. Januar 1990 (1990-01-01) , Seiten 49-54, XP000132261, ISSN: 0195-9271, DOI: 10.1007/BF01009813

**Beschreibung**

Die vorliegende Erfindung betrifft einen optischen Isolator, umfassend:
eine Blende, die eine Blendenöffnung zum Durchtritt von Laserstrahlung aufweist, die in einer ersten Richtung durch die Blendenöffnung tritt, wobei die Blende zur Beeinflussung einer Plasmazündschwelle für die Zündung eines Plasmas dient, um den Durchtritt von Laserstrahlung, die in einer zweiten, der ersten entgegen gesetzten Richtung propagiert, durch die Blendenöffnung zu unterdrücken. Die Erfindung betrifft auch eine Treiberlasereinrichtung für eine EUV-Strahlungserzeugungsvorrichtung mit mindestens einem optischen Isolator sowie eine EUV-Strahlungserzeugungsvorrichtung mit einer solchen Treiberlaseranordnung.

So genannte Laser Produced Plasma, LLP, EUV-Lichtquellen bzw. EUV-Strahlungserzeugungsvorrichtungen weisen eine Treiberlaseranordnung auf, die eine Strahlquelle, beispielsweise einen $CO_2$-Laser, zur Erzeugung von gepulster Laserstrahlung (d.h. einer Folge von Laserpulsen) umfasst. Die gepulste Laserstrahlung wird typischer Weise von mehreren optischen Verstärkern einer Verstärkeranordnung der Treiberlaseranordnung verstärkt. Die von der Treiberlaseranordnung erzeugte und verstärkte Laserstrahlung wird über eine Strahlführungseinrichtung einer Fokussiereinrichtung zugeführt, welche die Laserstrahlung in einem Zielbereich fokussiert, an dem ein Target-Material, beispielsweise in Form von Zinn-Tröpfchen, bereitgestellt wird, das bei der Bestrahlung mit der Laserstrahlung in einen Plasma-Zustand übergeht und hierbei EUV-Strahlung emittiert.

Bei einer solchen EUV-Strahlungserzeugungsvorrichtung wird ein Anteil der gepulsten Laserstrahlung an dem Target-Material zurück reflektiert und durchläuft die Strahlführungseinrichtung und die optischen Verstärker der Verstärkeranordnung in Rückwärtsrichtung, so dass die rückreflektierte Laserstrahlung ebenfalls verstärkt wird. Dadurch nimmt die Verstärkung des Verstärkermediums in den optischen Verstärkern ab, so dass sich die maximal erzielbare Leistung bei der Verstärkung der in Vorwärtsrichtung, d.h. in Richtung auf das Target-Material, propagierenden Laserstrahlung verringert. Typischer Weise ist es auch erforderlich, die rückreflektierte Laserstrahlung zu filtern, um die Strahlquelle vor einer Zerstörung durch die rückreflektierte Laserstrahlung zu schützen. Wenn herkömmliche optische Isolatoren z.B. in Form von Faraday-Isolatoren oder in Form von elektro-optischen Modulatoren verwendet werden, ist dies nur bis zu einer begrenzten Maximalleistung der zurückreflektierten Laserstrahlung möglich, da die optischen Isolatoren ansonsten durch die rückreflektierte Laserstrahlung geschädigt werden.

Aus der WO 2015/082004 A1 ist eine Verstärkeranordnung beispielsweise für eine Treiberlaseranordnung einer EUV-Strahlungserzeugungsvorrichtung bekannt geworden, wobei die Verstärkeranordnung einen optischen Isolator aufweist, der eine Polarisator-Einrichtung sowie eine Phasenschiebe-Einrichtung umfasst.

Zumindest die Polarisator-Einrichtung ist an einem Ort positioniert, an dem die Laserstrahlung eine Laserleistung von mehr als 500 W aufweist.

Durch die optische Filterung in einem optischen Isolator, der wie weiter oben beschrieben ausgebildet ist, wird in dem filternden Element des optischen Isolators typischer Weise eine thermische Linse erzeugt, welche die Divergenz bzw. die Strahleigenschaften der vorwärtslaufenden Laserstrahlung bzw. des vorwärtslaufenden Laserstrahls auf ungünstige Weise verändert. Wird außerdem die maximale Leistungsgrenze des filternden optischen Elements erreicht, muss die EUV-Strahlungserzeugungsvorrichtung bzw. die EUV-Lithographieanlage ausgeschaltet werden. Da ein Neustart der EUV-Lithographieanlage einen signifikanten Zeitverlust bedingt, wird dadurch die Produktivität der EUV-Lithographieanlage reduziert.

Erschwerend kommt bei der vorliegenden Anwendung hinzu, dass optische Isolatoren, welche auf dem Prinzip der Polarisation bzw. Phasenverschiebung basieren, bauartbedingt nur Laserstrahlung mit einem bestimmten Phasensprung bzw. mit einer bestimmten Phasenverschiebung (bspw. 180°) unterdrücken können. Der Wert für diesen Phasensprung bzw. für diese Phasenverschiebung wird ggf. bei der Reflexion an einem Tröpfchen nicht eingehalten, so dass die an dem Tröpfchen reflektierte Laserstrahlung auch aus diesem Grund von einem solchen optischen Isolator nicht vollständig unterdrückt werden kann.

In der WO 2015/045102 A1 ist eine Laservorrichtung beschrieben, die einen Master-Oszillator aufweist, der einen gepulsten Laserstrahl emittiert. Der gepulste Laserstrahl wird in einer Mehrzahl von optischen Verstärkern verstärkt, die im optischen Strahlweg des gepulsten Laserstrahls angeordnet sind. Die Laservorrichtung kann zusätzlich einen Lichtreflektor aufweisen, der es dem gepulsten Laserstrahl erlaubt, durch diesen hindurchzutreten, wobei der Lichtreflektor selbst-oszillierende Strahlung reflektiert, die an einem der Mehrzahl von Verstärkern erzeugt wird. Die Laservorrichtung weist auch einen Strahlungsabsorber auf, der die selbst-oszillierende Strahlung, die von dem Lichtreflektor reflektiert wird, aufnimmt und absorbiert.

In der US 2015/0208494 A1 ist eine EUV-Lichtquelle beschrieben, bei der ein Target-Material an einer Zielposition bereitgestellt wird und ein verstärkter Laserstrahl, der in Richtung auf die Zielposition propagiert, wird in einer Fokusebene fokussiert. Die Zielposition befindet sich außerhalb der Fokusebene und eine Wechselwirkung zwischen dem verstärkten Laserstrahl und dem Target-Material wandelt zumindest einen Teil des Target-Materials in ein Plasma um, das EUV-Strahlung emittiert. Auf diese Weise sollen Rückreflexe in der EUV-Lichtquelle reduziert werden.

Aus der US 4,194,813 ist ein optischer Isolator zur Unterdrückung von Rückreflexen bekannt geworden, die von einem mittels eines Lasers bestrahlten Target ausgehen. Der optische Isolator weist eine in einer Vakuum-Kammer angeordnete Scheibe, z.B. aus Aluminium oder aus Tantal, mit einer Blendenöffnung auf, die in dem durch die Kammer geführten Strahlengang des Lasers angeordnet ist. Der Isolator weist zusätzlich Mittel zur Fokussierung von Laserstrahlung auf die Blendenöffnung auf.

Die Blendenöffnung ist so klein, dass der fokussierte Strahl ihre Kanten beschädigt und hierbei ein Plasma erzeugt, um von dem bestrahlten Target rückreflektierte Strahlung aus dem Strahlengang abzulenken. Der Isolator weist Mittel auf, um den Anteil des Laserstrahls, der durch die Blendenöffnung hindurch tritt, erneut zu kollimieren. Auch die rückreflektierte Strahlung selbst kann ggf. dazu verwendet werden, ein Plasma zu erzeugen, welches die rückreflektierte Strahlung ablenkt.

Bei dem in der US 4,194,813 beschriebenen optischen Isolator besteht das Problem, dass das Plasma zwar die von dem Target rückreflektierte Strahlung ablenkt, aber die in Vorwärtsrichtung durch die Blendenöffnung hindurch tretende Laserstrahlung ggf. ebenfalls ungünstig beeinflusst.

T.W. Sheheen et al., J. Appl. Phys. 53 (1982) 4652-4656 beschreiben einen optischen Isolator mit einer LiF Blende und beruhend auf einer Plasmazündung im Vakuum mit längerer Lebensdauer.

Aufgabe der Erfindung

Der Erfindung liegt die Aufgabe zugrunde, einen optischen Isolator der eingangs genannten Art, eine Treiberlaseranordnung sowie eine EUV-Strahlungserzeugungsvorrichtung mit mindestens einem solchen optischen Isolator bereitzustellen, die einen effektiven Plasmarückreflexschutz ermöglichen.

Gegenstand der Erfindung

Die Aufgabe der Erfindung wird gelöst durch einen optischen Isolator wie in Anspruch 1 definiert. Vorteilhafte Ausbildungsformen werden in den abhängigen Ansprüchen definiert.

Diese Aufgabe wird gelöst durch einen optischen Isolator der eingangs genannten Art, bei dem die Blende derart (asymmetrisch) ausgebildet ist, dass die Blende für (gepulste) Laserstrahlung, die in einer Umgebung der Blendenöffnung auf die zweite Seite der Blende trifft, eine geringere Plasmazündschwelle aufweist als für (gepulste) Laserstrahlung, die in einer Umgebung der Blendenöffnung auf die erste Seite der Blende trifft.

Erfindungsgemäß wird vorgeschlagen, als optischen Isolator eine Blende zu verwenden, die zumindest in der Umgebung der Blendenöffnung, in der ein Strahlungsanteil aus dem Randbereich des Strahlprofils der Laserstrahlung auf die Blende trifft, nicht symmetrisch ist. Die Asymmetrie der Blende hinsichtlich der Plasmazündschwelle zumindest in der Umgebung der Blendenöffnung wird durch ein unterschiedliches Material hervorgerufen .

Die Blendenöffnung bildet einen Kanal durch die Blende, der zur ersten Seite und zur zweiten Seite der Blende hin offen ist und der zumindest an einer Stelle einen minimalen Durchmesser aufweist, der den Apertur-Durchmesser der Blende definiert. Die Wand des Kanals bildet den Rand der Blendenöffnung, der ebenso zur Umgebung der Blendenöffnung gehört wie ein unmittelbar an der ersten bzw. der zweiten Seite an den Kanal angrenzender Oberflächenbereich der Blende, auf den die Laserstrahlung auftrifft und der typischer Weise im Wesentlichen ringförmig ausgebildet ist. Es versteht sich, dass die Umgebung der Blendenöffnung, in der diese asymmetrisch ausgebildet ist, d.h. hinsichtlich der Plasmazündschwelle unterschiedliche Eigenschaften aufweist, sich ggf. in radialer Richtung weiter nach außen erstrecken kann als der Bereich, in dem die Laserstrahlung auf die jeweilige Seite der Blende auftrifft.

Unter der ersten Seite der Blende wird die Draufsicht auf die Blende in einer Blickrichtung entlang der in der ersten Richtung propagierenden Laserstrahlung parallel zur Längsachse der Blende verstanden. Auch ein Abschnitt des Randes des Kanals, in dem die Blendenöffnung bis zum minimalen Durchmesser der Blendenöffnung verläuft, gehört zur ersten Seite der Blende. Entsprechendes gilt für die zweite Seite der Blende, wobei die Blickrichtung in der zweiten, der ersten entgegen gesetzten Richtung verläuft.

Durch die stärkere Wechselwirkung der Laserstrahlung mit der Oberfläche der Blende an der zweiten Seite der Blende kann die Plasmazündschwelle der rückwärtslaufenden gepulsten Laserstrahlung selektiv gegenüber der Plasmazündschwelle der vorwärtslaufenden gepulsten Laserstrahlung reduziert werden, was eine bessere Filterung der rückreflektierten Laserstrahlung erlaubt. Bei einer herkömmlichen, symmetrisch ausgebildeten Blende ist die Plasmazündschwelle für die in der ersten Richtung und für die in der zweiten Richtung propagierende Laserstrahlung hingegen gleich groß. Die Plasmazündschwelle wird jedoch auch an einer solchen Blende durch das Verdampfen des Materials der Blende gegenüber der Plasmazündschwelle eines Gases bzw. eines Raumes reduziert, in dem kein verdampfbares Material vorhanden ist.

Durch die Asymmetrie der Blende wird für Laserstrahlung, die in der Umgebung der Blendenöffnung auf die zweite Seite der Blende auftrifft, die Plasmazündschwelle gegenüber Laserstrahlung gesenkt, die - unter gleichen Bedingungen - in der Umgebung der Blendenöffnung auf die erste Seite der Blende trifft. Unter gleichen Bedingungen bedeutet, dass Laserstrahlung, die identische Eigenschaften, z.B. identische Intensität, Strahlquerschnitt, Divergenz etc. aufweist, die Plasmaschwelle beim Auftreffen auf die erste Seite der Blende kleiner ist als die Plasmaschwelle beim Auftreffen auf die zweite Seite der Blende. Mit anderen Worten führt eine Umkehrung der Ausrichtung der Blende, d.h. eine Drehung der Blende um 180°, zu einer Umkehrung des oben beschriebenen Effekts, d.h. die Blende weist für in der Umgebung der Blendenöffnung auf die erste Seite auftreffende Laserstrahlung eine geringere Plasmaschwelle auf als für in der Umgebung der Blendenöffnung auf die zweite Seite der Blende auftreffende Laserstrahlung. Die unterschiedliche Plasmazündschwelle - bei gleicher Intensität bzw. bei gleichen Bedingungen der auftreffenden Laserstrahlung - kann beispielsweise dadurch erreicht werden, dass in der Umgebung der Blendenöffnung beim Auftreffen der Laserstrahlung an der ersten Seite der Blende weniger Material verdampft wird, d.h. dass diese für auf die erste Seite auftreffende Laserstrahlung eine geringere Verdampfungsrate als für auf die zweite Seite auftreffende Laserstrahlung aufweist, dies ist aber nicht zwingend erforderlich, da die Plasmazündschwelle auch von der Art des verdampften Materials sowie ggf. von weiteren Parametern abhängig ist. Es versteht sich, dass die Bedingungen, in denen die Blende in einer optischen Anordnung genutzt wird, nicht zwingend voraussetzen, dass die Laserstrahlung symmetrisch auf die beiden Seiten der Blende trifft, die Blende weist aber auch unter solchen Bedingungen die weiter oben beschriebenen Eigenschaften auf.

Bei der hier beschriebenen Lösung wird die Intensität der Laserstrahlung, die in der ersten Richtung propagiert und die durch die Blendenöffnung hindurch tritt, so klein gewählt, dass sich nur an der zweiten Seite der Blende ein Plasma bildet. Das Plasma an der zweiten Seite der Blende kann durch die in der zweiten Richtung propagierende Laserstrahlung gezündet werden, von der ein Anteil am äußeren Rand des Strahlquerschnitts auf die Umgebung der Blendenöffnung trifft und dort Material verdampft. In dem verdampften Material wird weitere Laserstrahlung absorbiert, wodurch sich das Plasma weiter ausbreitet und die Blendenöffnung für die in der zweiten Richtung propagierende Laserstrahlung verschließt. Die Unterdrückung des Durchtritts der in der zweiten Richtung propagierenden Laserstrahlung durch die Blendenöffnung erfolgt typischer Weise durch eine Absorption der Laserstrahlung in dem Plasma. Die Unterdrückung des Durchtritts der Laserstrahlung durch die Blendenöffnung kann alternativ oder zusätzlich auch auf andere Effekte zurückzuführen sein, die das Plasma auf die Laserstrahlung ausübt, beispielsweise auf die Brechung der Laserstrahlung an dem Plasma.

Das Plasma an der zweiten Seite der Blende kann aber auch durch die in der ersten Richtung propagierende Laserstrahlung gezündet werden, wenn diese in der Umgebung der Blendenöffnung an der zweiten Seite der Blende auftrifft, was z.B. durch Verwendung eines Zwischenfokus in der Blendenöffnung erreicht werden kann. In diesem Fall wird ein kleiner Anteil der in der ersten Richtung propagierenden Laserstrahlung zum Zünden eines Plasmas verwendet. Durch den zeitlichen Versatz zwischen der in der ersten Richtung propagierenden gepulsten Laserstrahlung und der zurück reflektierten, in der zweiten Richtung propagierenden Laserstrahlung wird die zurück reflektierte Laserstrahlung in dem vom in der ersten Richtung gezündeten Plasma gefiltert, da zum Zeitpunkt der Ankunft der rückreflektierten Laserstrahlung an der Blendenöffnung das Plasma weiter ausgedehnt ist und bereits die Mitte der Blendenöffnung erreicht hat.

In beiden weiter oben beschriebenen Fällen ist die Schließzeit des Rückreflexschutzes von der Ausbreitungsgeschwindigkeit des Plasmas bzw. von der Wahl des Apertur-Durchmessers, d.h. des minimalen Durchmessers der Blendenöffnung, abhängig. Für die vorliegenden Anwendungen hat sich ein minimaler Durchmesser der Blendenöffnung in der Größenordnung zwischen ca. 1 mm und ca. 5 mm als günstig erwiesen. Durch die in der zweiten Richtung propagierende Laserstrahlung wird das Material der Blende an der zweiten Seite abgetragen. Die Blende bildet somit ein Verschleißteil, welches typischer Weise regelmäßig ausgetauscht werden muss.

Die hier beschriebene Lösung eignet sich prinzipiell sowohl für Laserstrahlung, die von Gaslasern, beispielsweise von $CO_2$-Gaslasern, erzeugt wird und in entsprechenden optischen Verstärkern verstärkt wird als auch für Laserstrahlung, die von Festkörperlasern oder ggf. von anderen Lasern, beispielsweise von Faserlasern, erzeugt wird und die in entsprechenden optischen Verstärkern verstärkt wird.

Bei einer Ausführungsform weist die Umgebung der Blendenöffnung an der zweiten Seite der Blende eine kleinere Reflektivität für die Laserstrahlung auf als die Umgebung der Blendenöffnung an der ersten Seite der Blende. Die Reflektivität für die Laserstrahlung kann beispielsweise durch eine Oberflächenbehandlung der zweiten Seite der Blende reduziert werden, beispielsweise indem die Oberfläche an der zweiten Seite der Blende aufgeraut bzw. deren Oberflächenqualität verringert wird, um die Streuung der Oberfläche an der zweiten Seite der Blende zu erhöhen und somit deren Reflektivität zu reduzieren. Auch kann an der zweiten Seite der Blende auf einen Bearbeitungsschritt zur Glättung der Oberfläche, beispielsweise auf eine Diamantbearbeitung, verzichtet werden, um auf diese Weise die Reflektivität der Umgebung der Blendenöffnung an der zweiten Seite der Blende zu reduzieren.

Die Umgebung der Blendenöffnung an der zweiten Seite der Blende kann ggf. auch mit einer geeigneten Oberflächenstruktur versehen werden, welche die Reflektivität des Materials der Blende verringert bzw. die Absorption des Materials der Blende erhöht. Beispielsweise ist es bei Silizium bekannt, dass an dessen Oberfläche durch Beschuss mit hochenergetischen Ionen oder mit ultrakurzen Laserpulsen eine nadelartige Mikrostruktur ("schwarzes Silizium") erzeugt werden kann, welche die Absorption gegenüber einer unbehandelten Oberfläche deutlich erhöht und somit die Reflektivität der Oberfläche verringert. Auch bei anderen Materialien kann durch eine geeignete Strukturierung und/oder durch eine Erhöhung der Rauigkeit der Oberfläche die Absorption erhöht bzw. die Reflektivität verringert werden.

Die Reflektivität in der Umgebung der Blendenöffnung bezieht sich auf die Wellenlänge der Laserstrahlung, die durch die Blendenöffnung tritt bzw. die auf die Blende auftrifft und bei der es sich beispielsweise um Laserstrahlung bei Wellenlängen im nahen IR-Wellenlängenbereich, z.B. um ca. 1,06 $\mu$m, oder im IR-Wellenlängenbereich, beispielsweise um ca. 10,5 $\mu$m, handeln kann.

Bei einer Ausführungsform weist die Umgebung der Blendenöffnung an der ersten Seite der Blende ein Material auf, das sich vom Material der Umgebung der Blendenöffnung an der zweiten Seite der Blende unterscheidet. Das Material der Umgebung der Blendenöffnung an der zweiten Seite der Blende kann beispielsweise eine geringere Reflektivität für die Laserstrahlung aufweisen als das Material der Umgebung der Blendenöffnung an der ersten Seite der Blende. Dies ist aber nicht zwingend erforderlich, d.h. die beiden Materialien können sich auch in anderen Eigenschaften voneinander unterscheiden, die zu einer unterschiedlichen Plasmaschwelle führen (s.u.).

Das Vorsehen von unterschiedlichen Materialien an den beiden Seiten der Blende in der Umgebung der Blendenöffnung kann beispielsweise dadurch realisiert werden, dass die Blende mehrteilig, beispielsweise zweiteilig, ausgebildet ist. In diesem Fall können die beiden Teile der Blende beispielsweise in einem gemeinsamen Rahmen aufgenommen und fixiert werden oder die beiden Teile der Blende können ggf. in einem Bereich außerhalb der Umgebung der Blendenöffnung auf andere Weise, z.B. durch Verschrauben, miteinander verbunden werden. Das Erzeugen von unterschiedlichen Materialien an den beiden Seiten der Blende kann beispielsweise auch dadurch erreicht werden, dass das Material des Grundkörpers der Blende an einer Seite, beispielsweise an der zweiten Seite, einer Oberflächenbehandlung unterzogen wird, beispielsweise indem das Material des Grundkörpers oxidiert wird. Handelt es sich bei dem Material des Grundkörpers um Kupfer, kann dieses beispielsweise zu Kupferoxid oxidiert werden. Auch andere Oberflächenmodifikationen des Materials des Grundkörpers, beispielsweise unter Verwendung von Chrom, sind möglich.

Bei einer Weiterbildung weist das Material der Umgebung der Blendenöffnung an der zweiten Seite der Blende eine kleinere Plasmazündschwelle für die auftreffende Laserstrahlung auf als das Material der Umgebung der Blendenöffnung an der ersten Seite der Blende. In dem Artikel "Investigation of low-threshold gas breakdown near solid targets by CO2 laser radiation" von A.I. Barchukov et al., Sov. Phys.-JETP, Vol. 39, No. 3, September 1974, sind die theoretischen Grundlagen zur Reduzierung der Plasmazündschwelle bei der Wechselwirkung zwischen einem Laserstrahl und einer Oberfläche beschrieben: Der Laserstrahl verdampft einen kleinen Teil des Materials der Oberfläche und in diesem Materialdampf wird dann wieder mehr Laserstrahlung absorbiert, was zu einer Zündung des Plasmas führt.

Die Verdampfungsrate, d.h. der stationäre Fluss von Teilchen j von der Oberfläche eines Materials ist gemäß dem obigen Artikel nach folgender Formel (vgl. dort Gleichung (3)) abhängig von der Intensität I der auftreffenden Laserstrahlung, der Reflektivität R des Materials, der materialspezifischen Verdampfungsenthalpie q und der Atommasse M:

$$j = (1 - R)\, I\, /\, (M\, q) \tag{1}$$

Neben der weiter oben beschriebenen Verringerung der Reflektivität des Materials in der Umgebung der Blendenöffnung können somit ggf. auch eine größere Verdampfungsenthalpie q und/oder eine größere Atommasse M des Materials in der Umgebung der Blendenöffnung an der ersten Seite der Blende zu einer reduzierten Verdampfungsrate und damit ggf. zu einer Verringerung der Plasmaschwelle im Vergleich zur Umgebung der Blendenöffnung an der zweiten Seite der Blende führen. Es versteht sich, dass das Modell, welches in dem oben zitierten Artikel beschrieben ist, nicht alle Parameter erfasst, die den Prozess der Plasmabildung bei der Wechselwirkung der Laserstrahlung mit dem Material der Blende beeinflussen, d.h. die Plasmazündschwelle ist neben der Verdampfungsrate ggf. von weiteren Parametern abhängig.

Bei einer Weiterbildung weist die Umgebung der Blendenöffnung an einer der beiden Seiten der Blende eine Beschichtung aus einem Material auf, das sich vom Material in der Umgebung der Blendenöffnung an der anderen Seite der Blende unterscheidet. In diesem Fall ist die Blende bevorzugt einteilig ausgebildet und weist bevorzugt nur an einer der beiden Seiten eine Beschichtung auf. Bei dem Material der Blende kann es sich beispielsweise um ein metallisches Material, z.B. um Kupfer, handeln. Ist die Beschichtung an der ersten Seite der Blende aufgebracht, kann diese dazu dienen, die Plasmaschwelle für die auf die erste Seite auftreffende Laserstrahlung gegenüber dem Material des Grundkörpers der Blende zu erhöhen. Ist die Beschichtung auf die zweite Seite der Blende aufgebracht, dient diese typischer Weise dazu, die Plasmaschwelle gegenüber dem Material des Grundkörpers der Blende zu senken. Es versteht sich, dass auch an beiden Seiten der Blende in der Umgebung der Blendenöffnung eine Beschichtung aufgebracht sein kann, wobei sich die Materialien der beiden Beschichtungen typischer Weise voneinander unterscheiden, so dass die Plasmaschwelle an der zweiten Seite der Blende geringer ist als an der ersten Seite der Blende.

Bei einer Weiterbildung ist die Beschichtung in der Umgebung der Blendenöffnung an der zweiten Seite der Blende gebildet und enthält Graphit, ein Metall, bevorzugt Aluminium, Wolfram oder Molybdän, Edelstahl oder eine Keramik, bevorzugt Aluminiumoxid oder Kupferoxid. Wie weiter oben beschrieben wurde, dient die Beschichtung in der Umgebung der Blendenöffnung an der zweiten Seite der Blende dazu, die Plasmaschwelle gegenüber dem Material des Grundkörpers der Blende zu reduzieren, bei dem es sich typischer Weise um ein metallisches Material handelt. Die metallischen Materialien der Beschichtung weisen in der Regel eine geringere Reflektivität auf als das Material des Grundkörpers bzw. das Material in der Umgebung der Blendenöffnung an der ersten Seite der Blende. Es versteht sich, dass die für die Beschichtung verwendeten Materialien nicht zu schnell verdampfen sollten, da ansonsten die Blende im Dauerbetrieb zu schnell verschleißt; aus diesem Grund ist Graphit als Beschichtungsmaterial nur bedingt geeignet. Es versteht sich ebenfalls, dass die Beschichtung nicht die gesamte Umgebung der Blendenöffnung überdecken muss, sondern dass die Beschichtung ggf. nur in einem Teilbereich der Umgebung der Blendenöffnung aufgebracht sein kann.

Bei einer weiteren Ausführungsform weist die Umgebung der Blendenöffnung an der ersten Seite der Blende eine Geometrie auf, die sich von der Geometrie der Umgebung der Blendenöffnung an der zweiten Seite der Blende unterscheidet. Durch eine unterschiedliche Geometrie der Umgebung der Blendenöffnung, insbesondere des Randes der Blendenöffnung, welche einen Kanal durch die Blende bildet, kann die Verdampfungsrate an der ersten Seite der Blende gegenüber der Verdampfungsrate an der zweiten Seite der Blende reduziert werden:

Wie der weiter oben angegebenen Gleichung (1) zu entnehmen ist, hängt die Verdampfungsrate unter anderem von der Intensität I der Laserstrahlung an der Oberfläche ab, an der Material verdampft wird. Die Intensität I der Laserstrahlung ist durch die Leistung definiert, die pro Flächeneinheit auf die Oberfläche auftrifft. Wird der Flächeninhalt der Umgebung der Blendenöffnung auf der ersten Seite der Blende vergrößert, in der die in der ersten Richtung propagierende Laserstrahlung auf die Blende auftrifft, verringert sich die Intensität der Laserstrahlung und somit die Verdampfungsrate des Materials an der ersten Seite der Blende. Der Flächeninhalt der Umgebung der Blendenöffnung an der ersten Seite der Blende kann erhöht werden, indem die Erstreckung der Umgebung der Blende, insbesondere des Randes der Blendenöffnung, in Längsrichtung der Blende, d.h. parallel zur Propagationsrichtung der Laserstrahlung, vergrößert wird.

Bei einer weiteren Ausführungsform weist der Rand der Blendenöffnung einen sich erweiternden Abschnitt auf, an dem der Durchmesser der Blendenöffnung zur ersten Seite der Blende hin insbesondere stetig zunimmt. An Stelle einer Blendenöffnung mit einem zylindrischen Rand, wie er bei herkömmlichen Blenden verwendet wird, wird bei dieser Ausführungsform vorgeschlagen, zur Vergrößerung des Flächeninhalts der Umgebung der Blendenöffnung, in der die Laserstrahlung auf die Blende auftrifft, eine Blendenöffnung mit einem Rand bzw. einer Kanalwandung zu verwenden, die einen sich zur ersten Seite hin erweiternden Durchmesser aufweist. Derartige Blendenöffnungen, die einen Rand mit konischer Geometrie aufweisen, sind beispielsweise aus dem Artikel "Spatial filter pinhole development for the National Ignition Facility", von J.E. Murray et al., Applied Optics, Vol. 39, Nr. 9, März 2000, Seiten 1405-1420 oder dem Artikel "Spatial Filter Issues" von J.E. Murray et al., Second International Conference on Solid State Lasers for Application to ICF. International Society for Optics and Photonics, 1997, beschrieben. Die konische Geometrie des Randes soll dort dazu dienen, dass die Blendenöffnung nicht bzw. erst zu einem späteren Zeitpunkt durch ein Plasma verschlossen wird als dies bei einer Blendenöffnung mit einer herkömmlichen, zylindrischen Geometrie der Fall ist. Bei der in dem erfindungsgemäßen optischen Isolator verwendeten Blende nimmt der Durchmesser der Blendenöffnung typischer Weise ausgehend von dem minimalen Durchmesser der Blendenöffnung stetig zu, es ist allerdings nicht erforderlich, dass die Zunahme des Durchmessers entlang der Längsachse der Blende konstant ist, wie dies bei einer konischen Blendenöffnung der Fall ist. Es versteht sich, dass in dem für die vorliegende Anwendung nicht relevanten Fall, dass die Bildung eines Plasmas an der Blende vermieden werden soll, der Durchmesser der Blendenöffnung ausgehend von dem minimalen Durchmesser auch zur zweiten Seite hin zunehmen kann, wobei insbesondere eine spiegelsymmetrische Geometrie der Blende bzw. der Blendenöffnung realisiert werden kann.

Bei einer weiteren Ausführungsform erweitert sich der Rand der Blendenöffnung an der zweiten Seite der Blende ausgehend von einem minimalen Durchmesser der Blendenöffnung nicht. Die Blendenöffnung kann beispielsweise an der zweiten Seite einen zylindrischen Abschnitt aufweisen, der einen konstanten Durchmesser aufweist. Der sich erweiternde Abschnitt des Randes der Blendenöffnung kann sich zur ersten Seite hin an den zylindrischen Abschnitt des Randes der Blendenöffnung anschließen Es ist aber auch möglich, dass der Kanal, der von der Blendenöffnung gebildet wird, seinen minimalen Durchmesser erst unmittelbar an der Mündung der Blendenöffnung bzw. des Kanals an der zweiten Seite der Blende aufweist, d.h. die Blendenöffnung bzw. der Kanal weist den minimalen Durchmesser nur an einer einzigen Stelle in Längsrichtung der Blende auf. Durch die sich nicht zur zweiten Seite hin erweiternde Blendenöffnung trifft die in der zweiten Richtung propagierende Laserstrahlung auf eine Kante der Blendenöffnung, wodurch sich die Intensität der auftreffenden Laserstrahlung und somit die Verdampfungsrate erhöht.

Bei einer Weiterbildung schließt sich an den minimalen Durchmesser des Randes der Blendenöffnung eine Verrundung an, die in den sich erweiternden Abschnitt des Randes der Blendenöffnung übergeht. Durch die Verrundung trifft die in der ersten Richtung propagierende Laserstrahlung an dem Übergang zwischen dem minimalen Durchmesser und dem sich beispielsweise konisch erweiternden Abschnitt nicht auf eine scharfe Kante, wodurch die Plasmazündschwelle an der ersten Seite der Blende weiter gesenkt werden kann.

Bei einer weiteren Ausführungsform umfasst der optische Isolator eine Fokussiereinrichtung zur Fokussierung der in der ersten Richtung propagierenden Laserstrahlung auf einen Laserstrahlfokus, der im Bereich der Blendenöffnung gebildet ist, sowie bevorzugt eine Kollimationseinrichtung zur Kollimation der von dem Laserstrahlfokus ausgehenden Laserstrahlung. Die Blendenöffnung ist typischer Weise in der Brennebene der Fokussiereinrichtung, z.B. in Form einer Linse oder eines gekrümmten Spiegels, beispielsweise eines Parabolspiegel-Segments, angeordnet. Typischer Weise wird die in der ersten Richtung propagierende Laserstrahlung in oder in die Nähe des Endes des Randes der Blendenöffnung an der zweiten Seite der Blende fokussiert, insbesondere wenn die Blendenöffnung den weiter oben beschriebenen, sich zur ersten Seite der Blende hin erweiternden Abschnitt aufweist. Auch die Kollimationseinrichtung kann beispielsweise als Linse oder als gekrümmter Spiegel, beispielsweise als Parabolspiegel-Segment, ausgebildet sein und die Blende kann in der Brennebene der Kollimationseinrichtung angeordnet sein, so dass diese gemeinsam mit der Fokussiereinrichtung ein Strahlteleskop bildet.

Bei einer weiteren Ausführungsform umfasst der optische Isolator eine Kammer, in der die Blende angeordnet ist, ein Eintrittsfenster zum Eintritt der in der ersten Richtung propagierenden Laserstrahlung in die Kammer sowie ein Austrittsfenster zum Austritt der in der ersten Richtung propagierenden Laserstrahlung aus der Kammer. Wie aus der weiter oben zitierten US 4,194,813 beschrieben ist, kann die Blende in einer Vakuum-Kammer angeordnet sein. Es ist aber auch möglich bzw. bevorzugt, in die Kammer, in der die Blende angeordnet ist, ein Gas einzubringen, welches einen ggf. erheblichen statischen Druck, z.B. Atmosphärendruck, aufweist.

Es hat sich als günstig erwiesen, in der Kammer eine definierte Gasatmosphäre zu erzeugen, welche die Bildung eines Plasmas und eine selektive, passive Filterung der rückreflektierten Laserstrahlung vereinfacht. Bei dem in der Kammer bzw. in der Gasatmosphäre der Kammer vorhandenen Gas kann es sich beispielsweise um Stickstoff handeln, ggf. aber auch um Helium oder um Argon. Der Stickstoff in der Kammer kann beispielsweise einen Druck zwischen ca. 50 mbar und ca. 2 bar aufweisen. Geeignete Druckbereiche für unterschiedliche Gase und für Laserstrahlung bei einer Wellenlänge von 10,6 $\mu$m sind beispielsweise dem Artikel "Breakdown thresholds in rare and molecular gases using pulsed 10.6 $\mu$m radiation" von G.A. Hill et al., Journal of Physics D, Vol. 5, No. 11, 1972 zu entnehmen. Der Druck in der Kammer kann beispielsweise mit Hilfe einer Druckregeleinrichtung geregelt werden. Die Kammer, welche die Blende umgibt, kann insbesondere längs oder quer mit Gas durchströmt werden, um bei der Plasmabildung dissoziertes Gas auszutauschen und die Wärme bei der Filterung der in der zweiten Richtung propagierenden Laserstrahlung abzuführen. Die Gasströmung kann extern vorgegeben werden oder durch Gaskanäle in der Blende selbst gesteuert werden. Das Gas kann innerhalb eines geschlossenen Gas-Kreislaufs umlaufen, wobei die Kühlung des Gases beispielsweise durch ein Turboradialgebläse realisiert werden kann. Zur Wärmeabfuhr kann die Blende alternativ oder zusätzlich direkt aktiv oder passiv gekühlt werden.

Die Erfindung betrifft auch eine Treiberlaseranordnung für eine EUV-Strahlungserzeugungsvorrichtung, umfassend: eine Strahlquelle, die ausgebildet ist, Laserstrahlung zu erzeugen, die in einer ersten Richtung propagiert, eine Verstärkeranordnung mit mindestens einem optischen Verstärker zur Verstärkung der Laserstrahlung, sowie mindestens einen optischen Isolator wie weiter oben beschrieben, bei dem die in der ersten Richtung propagierende Laserstrahlung durch die Blendenöffnung der Blende hindurchtritt. Der optische Isolator dient dazu, in der zweiten, der ersten entgegen gesetzten Richtung propagierende Laserstrahlung zu filtern und auf diese Weise zu verhindern, dass diese in die Strahlquelle eintreten und diese beschädigen kann.

Bei einer Ausführungsform ist die Blende zwischen zwei aufeinander folgenden optischen Verstärkern der Verstärkeranordnung angeordnet. Die Anordnung der Blende bzw. des optischen Isolators zwischen zwei aufeinander folgenden optischen Verstärkern ist günstig, da dort ohnehin eine Blende als Raumfilter vorhanden sein kann, die auf die weiter oben beschriebene Weise als optischer Isolator genutzt werden kann.

Insbesondere ist es vorteilhaft, wenn die Blende bzw. der optische Isolator zwischen einem ersten, der Strahlquelle benachbarten optischen Verstärker und einem zweiten, dem ersten im Strahlweg unmittelbar nachfolgenden optischen Verstärker angeordnet ist, da in diesem Fall die in der ersten Richtung propagierende Laserstrahlung noch keine zu hohe Intensität aufweist, um ein Plasma zu zünden und die in der zweiten Richtung propagierende, rückreflektierte Laserstrahlung bereits eine ausreichende Intensität aufweist, um an einer geeignet ausgebildeten Blende ein Plasma zu zünden. Das Eintrittsfenster der Kammer kann mit einem Austrittsfenster eines ersten optischen Verstärkers zusammenfallen. Ebenso kann das Austrittsfenster der Kammer mit dem Eintrittsfenster eines zweiten optischen Verstärkers der Verstärkeranordnung zusammenfallen, um einen minimalen Materialaufwand sowie eine kompakte Bauform zu ermöglichen.

Die Erfindung betrifft auch eine EUV-Strahlungserzeugungsvorrichtung, umfassend: eine Treiberlaseranordnung wie weiter oben beschrieben, eine Vakuum-Kammer, in der ein Target-Material anordenbar ist, sowie eine Strahlführungseinrichtung zur Führung der in der ersten Richtung propagierenden Laserstrahlung von der Treiberlasereinrichtung zu dem Target-Material. Wie weiter oben beschrieben wurde, trifft die (gepulste) Laserstrahlung, welche in der ersten Richtung propagiert, auf das Target-Material, z.B. in Form von Zinn-Tröpfchen, und wird an diesem teilweise reflektiert. Die an dem Target-Material zurück reflektierte Laserstrahlung propagiert in der zweiten Richtung entlang der Strahlführungseinrichtung, durchläuft erneut die Verstärkeranordnung und wird an dem optischen Isolator durch die weiter oben beschriebene Plasma-Erzeugung an der Blende gefiltert, so dass diese nicht zur Strahlquelle zurück gelangen kann.

Es versteht sich, dass der weiter oben beschriebene optische Isolator bzw. der passive Plasmaschalter auch in anderen optischen Systemen als in einer EUV-Strahlungserzeugungsvorrichtung verwendet werden kann, beispielsweise bei optischen Systemen wie gepulsten Festkörperlasern bzw. Festkörperverstärkern. Weitere Vorteile der Erfindung ergeben sich aus der Beschreibung und der Zeichnung.

Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1a,b zwei Schnittdarstellungen einer Blende mit einer Blendenöffnung, die sich zu einer ersten Seite der Blende hin erweitert, um eine Plasmazündschwelle an der ersten Seite der Blende zu erhöhen und die an einer zweiten Seite in der Umgebung der Blendenöffnung eine Beschichtung zur Reduzierung der Plasmazündschwelle aufweist,

Fig. 2a-c schematische Darstellungen einer Draufsicht auf die zweite Seite der Blende, bei der am Rand der Blendenöffnung ein Plasma gezündet wird und sich in das Innere der Blendenöffnung ausbreitet, um den Durchtritt von Laserstrahlung durch die Blendenöffnung zu verhindern,

Fig. 3a,b zwei Schnittdarstellungen eines Details der Blende von Fig. 1a,b, bei der das Plasma durch auf die zweite Seite der Blende auftreffende Laserstrahlung gezündet wird,

Fig. 4a,b zwei Schnittdarstellungen analog zu Fig. 3a,b, bei denen das Plasma von Laserstrahlung gezündet wird, die von der ersten Seite aus durch die Blendenöffnung propagiert,

Fig. 5a,b zwei Darstellungen einer EUV-Strahlungserzeugungsvorrichtung, die einen optischen Isolator mit einer Blende aufweist, deren Blendenöffnung im Bereich eines Laserstrahlfokus einer Teleskopanordnung angeordnet ist, die in Fig. 5a aus zwei Linsen und in Fig. 5b aus zwei Paraboloid-Segmenten gebildet ist.

In der folgenden Beschreibung der Zeichnungen werden für gleiche bzw. funktionsgleiche Bauteile identische Bezugszeichen verwendet.

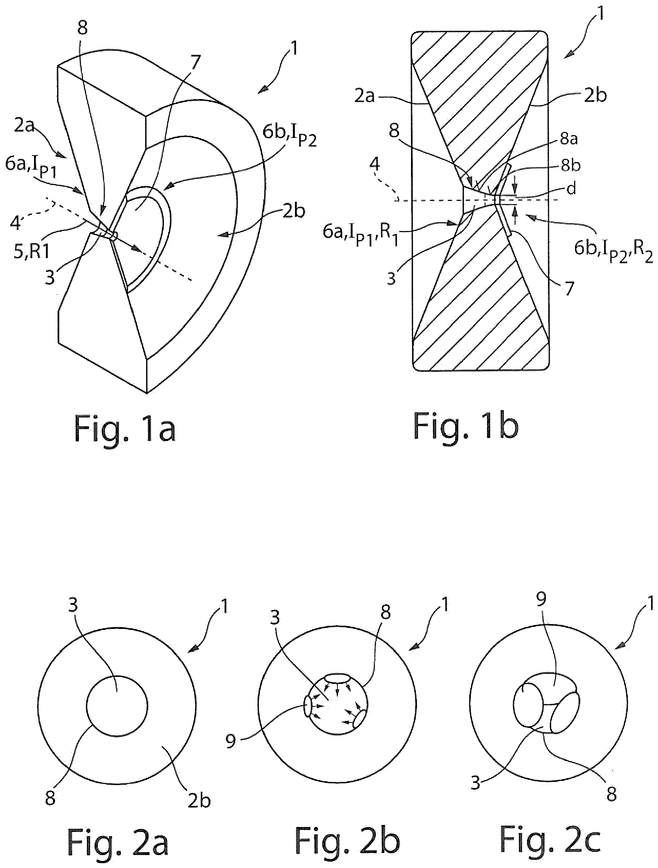

**Fign. 1a**,b zeigen jeweils eine Blende 1, die eine erste Seite 2a und eine der ersten Seite 2a gegenüber liegende zweite Seite 2b aufweist. In der Blende 1, genauer gesagt in einem Grundkörper der Blende 1, ist eine röhrenförmige Blendenöffnung 3 in Form eines röhrenförmigen Kanals gebildet, dessen eines Ende an der ersten Seite 2a der Blende 1 mündet und dessen anderes Ende an der zweiten Seite 2b der Blende 1 mündet. Durch die Blendenöffnung 3 kann Laserstrahlung 5, die in Fig. 1a durch einen Pfeil angedeutet ist, entlang einer ersten Richtung R1 von der ersten Seite 2a der Blende 1 zur zweiten Seite 2b der Blende 1 gelangen.

Die Blende 1 weist eine Längsachse 4 auf, die zentrisch durch die Blendenöffnung 3 verläuft. Die Blende 1 ist im gezeigten Beispiel rotationssymmetrisch zu ihrer Längsachse 4 ausgebildet. Dies ist vorteilhaft, um die Blende 1 bzw. deren Grundkörper einfach fertigen und z.B. durch Diamantdrehen herstellen zu können, eine rotationssymmetrische Geometrie der Blende 1 ist aber nicht zwingend erforderlich.

Die Blende 1, genauer gesagt der Grundkörper der Blende 1, ist im gezeigten Beispiel aus einem metallischen Material, beispielsweise aus Kupfer, gebildet. An der zweiten Seite 2b weist die Blende 1 in einer Umgebung 6b der Blendenöffnung 3 eine Beschichtung 7 auf, die im gezeigten Beispiel aus Graphit gebildet ist. Die Beschichtung 7 umgibt das Ende der röhrenförmigen Blendenöffnung 3 an der zweiten Seite 2b der Blende 1 ringförmig und schließt sich unmittelbar an das Ende der röhrenförmigen Blendenöffnung 3 an, wie insbesondere in Fig. 1b zu erkennen ist.

Die Beschichtung 7 in der Umgebung 6b der Blendenöffnung 3 an der zweiten Seite 2b der Blende 1 reduziert eine Plasmazündschwelle $I_2$ an der zweiten Seite 2b der Blende 1 gegenüber dem metallischen Material des Grundkörpers der Blende 1, welches in einer Umgebung 6a der Blendenöffnung 3 an der ersten Seite 2a der Blende 1 vorhanden ist. Die Plasmazündschwelle $I_1$ in der Umgebung 6a der Blendenöffnung 3 an der ersten Seite 2a der Blende 1 ist daher größer als in der Umgebung 6b der Blendenöffnung 3 an der zweiten Seite 2b der Blende 1, in der die Beschichtung 7 aufgebracht ist, d.h. es gilt $I_1 > I_2$.

Die Plasmazündschwelle $I_2$ in der Umgebung 6b der Blendenöffnung 3 an der zweiten Seite 2b der Blende 1 ist geringer, da das Graphit-Material der Beschichtung 7 eine größere Verdampfungsrate aufweist als das metallische Material in der Umgebung 6a der Blendenöffnung 3 an der ersten Seite 2a der Blende 1. Die Verdampfungsrate, d.h. der stationäre Fluss von Teilchen j von der Oberfläche eines Materials ist gemäß folgender Formel abhängig von der Intensität I der auftreffenden Laserstrahlung, der Reflektivität R des Materials, der materialspezifischen Verdampfungsenthalpie q und der Atommasse M des Materials:

$$j = (1 - R)\, I\, /\, (M\, q) \tag{1}$$

Im gezeigten Beispiel weist das Graphit-Material der Beschichtung 7 für die Laserstrahlung 5 eine kleinere Reflektivität $R_2$ auf als die Reflektivität $R_1$ des metallischen Materials des Grundkörpers der Blende 1, d.h. es gilt $R_2 < R_1$. Aufgrund dieser Eigenschaft des Graphit-Materials der Beschichtung 7 ist die Verdampfungsrate in der Umgebung 6b der Blendenöffnung 3 an der zweiten Seite 2b der Blende 1 größer als in der Umgebung 6a der Blendenöffnung 3 an der ersten Seite 2a der Blende 1. Alternativ oder zusätzlich zu Graphit kann die Beschichtung 7 auch andere Materialien aufweisen, beispielsweise Metalle wie Aluminium, Wolfram oder Molybdän, die eine kleinere Reflektivität $R_2$ aufweisen die Reflektivität $R_1$ des metallischen Materials des Grundkörpers der Blende 1. Die Beschichtung 7 kann auch keramische Materialien wie z.B. Aluminiumoxid oder Kupferoxid oder Edelstahl enthalten. Es ist auch möglich, dass das Material der Beschichtung 7 eine kleinere Verdampfungsrate als das Material in der Umgebung 6a der Blendenöffnung 3 an der ersten Seite 2a der Blende 1 hat, aber trotzdem eine geringere Plasmaschwelle $I_{P2}$ aufweist als das Material in der Umgebung 6a der Blendenöffnung 3 an der ersten Seite 2a der Blende 1.

Zusätzlich zur Beschichtung 7, welche die Plasmaschwelle $I_{P2}$ in der Umgebung 6b der Blendenöffnung 3 an der zweiten Seite 2b der Blende 1 senkt, unterscheidet sich auch die Geometrie der Umgebung 6a der Blendenöffnung 3, genauer gesagt des Randes 8 der Blendenöffnung 3, welcher einen röhrenförmigen Kanal durch die Blende 1 bildet, an der ersten Seite 2a der Blende 1 von der Geometrie des Randes 8 der Blendenöffnung 3 an der zweiten Seite 2b der Blende 1.

Im gezeigten Beispiel ist der Rand 8 der Blendenöffnung 3 an der zweiten Seite 2b der Blende 1 durch eine Stelle mit minimalem Durchmesser d definiert, an dem die röhrenförmige Blendenöffnung 3 an der zweiten Seite 2b der Blende 1 mündet. Der minimale Durchmesser d liegt typischer Weise zwischen ca. 1 mm und ca. 5 mm. Der Rand 8 der Blendenöffnung 3 erweitert sich an der zweiten Seite 2b der Blende 1 ausgehend von dem minimalen Durchmesser d nicht in radialer Richtung nach außen, d.h. der Rand 8 bildet an der Stelle mit dem minimalen Durchmesser d an der zweiten Seite 2b der Blende 1 eine Kante, was zur Reduzierung der Plasmaschwelle $I_{P2}$ an der zweiten Seite 2b der Blende 1 beiträgt, da die Intensität der auftreffenden Laserstrahlung 5 an einer Kante erhöht ist und somit die Verdampfungsrate zunimmt, vgl. Gleichung (1).

Um die Plasmaschwelle $I_{P1}$ für an der ersten Seite 2a auf die Blende 1 auftreffende Laserstrahlung 5 zu reduzieren, weist bei der in Fig. 1a,b gezeigten Blende 1 der Rand 8 der Blendenöffnung 3 einen sich erweiternden Abschnitt 8a auf, an dem der Durchmesser der Blendenöffnung 3 zur ersten Seite 2a der Blende 1 hin zunimmt. Der sich erweiternde Abschnitt 8a des Randes 8 der Blendenöffnung 3 ist im gezeigten Beispiel konisch ausgebildet, d.h. dieser weist einen über seine gesamte Länge konstanten Winkel zur Längsachse 4 der Blende 1 auf, der beispielsweise zwischen ca. 15°-20° liegen kann. An den minimalen Durchmesser d des Randes 8 der Blendenöffnung 3 schließt sich eine Verrundung 8b an, die stetig in den sich erweiternden Abschnitt 8a des Randes 8 der Blendenöffnung 3 übergeht. Auf diese Weise wird verhindert, dass die Laserstrahlung 5, welche in der ersten Richtung R1 propagiert, am Rand 8 der Blendenöffnung 3 auf eine scharfe Kante trifft. Die Laserstrahlung 5, die in der Umgebung 6a der Blendenöffnung 3, genauer gesagt entlang des Randes 8 an der ersten Seite 2a auf die Blende 1 trifft, wird durch den konischen Abschnitt 8a sowie die Verrundung 8b des Randes 8 über eine größere Fläche verteilt, so dass die Intensität I, d.h. die Leistung pro Fläche, der auftreffenden Laserstrahlung 5 reduziert wird, was gemäß Gleichung (1) zu einer Reduzierung der Verdampfungsrate und in der Regel zu einer Erhöhung der Plasmaschwelle $I_{P1}$ an der ersten Seite 2a der Blende 1 führt.

Um die Plasmaschwelle $I_{P2}$ an der zweiten Seite 2b der Blende 1 gegenüber der Plasmaschwelle $I_{P1}$ an der ersten Seite 2a der Blende 1 zu reduzieren, ist ggf. eine der beiden weiter oben beschriebenen Maßnahmen ausreichend, d.h. es kann ggf. auf die Beschichtung 7 oder auf die asymmetrische Geometrie des Randes 8 der Blendenöffnung 3 verzichtet werden. Alternativ oder zusätzlich zu der Beschichtung 7 an der zweiten Seite 2b der Blende 1 kann auch an der ersten Seite 2a der Blende 1 eine Beschichtung aufgebracht werden, deren Material sich vom Material der Beschichtung 7 an der zweiten Seite 2b der Blende 1 unterscheidet.

Um eine Blende 1 zu realisieren, bei der in der Umgebung 6b der Blendenöffnung 3 an der zweiten Seite 2b der Blende 1 ein anderes Material als in der Umgebung 6a der Blendenöffnung 3 an der ersten Seite 2a der Blende 1 vorhanden ist, kann die Blende 1 ggf. zwei- oder mehrteilig ausgebildet sein, wobei die Teile typischer Weise durch eine form- und/oder kraftschlüssige Verbindung miteinander verbunden sind. Es ist aber auch möglich, eine Oberflächenmodifikation des Materials z.B. in der Umgebung 6b der Blendenöffnung 3 an der zweiten Seite 2b der Blende 1 vorzunehmen, beispielsweise indem das Material des Grundkörpers oxidiert oder auf andere Weise modifiziert wird.

Wie in Fig. 1a,b zu erkennen ist, sind die erste Seite 2a und die zweite Seite 2b der Blende 1 nicht parallel zueinander, vielmehr weisen diese einen sich ausgehend von der Blendenöffnung 3 erweiternden konischen Abschnitt auf, wobei der Öffnungswinkel des konischen Abschnitts zur Längsachse 4 der Blende 1 einen Winkel von mehr als ca. 65° aufweist, so dass der jeweilige konische Abschnitt insgesamt einen stumpfen Winkel bildet. An den konischen Abschnitten wird Laserstrahlung 5, die an der Blende 1 reflektiert wird, seitlich aus dem Strahlengang abgelenkt und kann von (nicht gezeigten) Absorbereinrichtungen absorbiert werden.

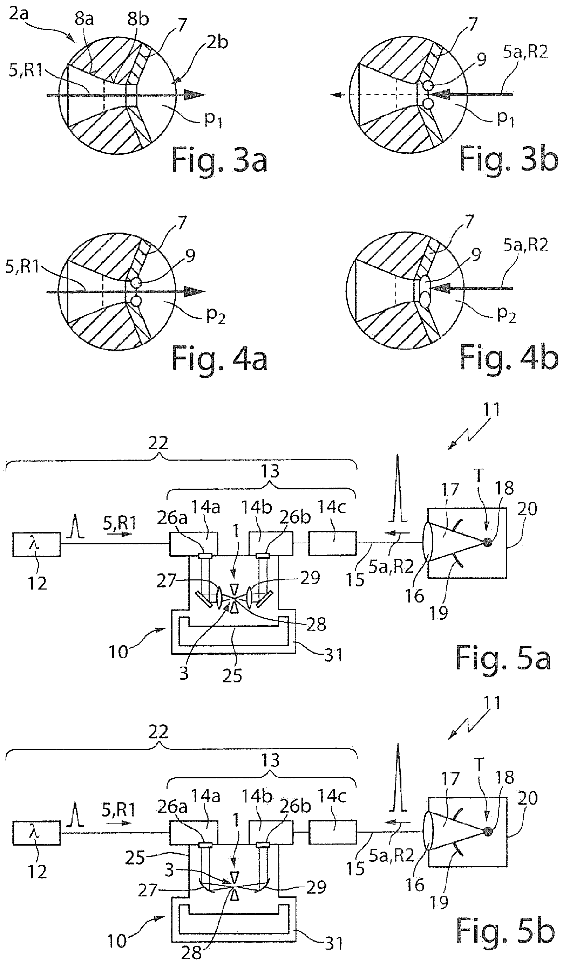

Nachfolgend wird anhand von **Fig. 2a-c** sowie anhand von **Fig. 3a**,b und **Fig. 4a,b** dargestellt, wie an der Blende 1, genauer gesagt an der zweiten Seite 2b der Blende 1, welche in Fig. 2a-c dargestellt ist, ein Plasma 9 erzeugt wird. Fig. 3a,b und Fig. 4a,b zeigen jeweils ein Detail einer Schnittdarstellung der Blende 1 in einer zur Zeichenebene von Fig. 1a-c senkrechten Ebene, wobei der Schnitt die Längsachse 4 der Blende 1 enthält.

Wie in Fig. 3a zu erkennen ist, propagiert gepulste Laserstrahlung 5 in der ersten Richtung R1 durch die Blendenöffnung 3, wobei in Fig. 3a,b auf die Darstellung des Strahlverlaufs der Laserstrahlung 5 verzichtet wurde. Bei dem in Fig. 3a gezeigten Beispiel tritt die in der ersten Richtung R1 propagierende Laserstrahlung 5 durch die Blendenöffnung 3, ohne dass an der Blende 1 ein Plasma 9 gezündet wird. Ein Teil der in der ersten Richtung R1 propagierenden Laserstrahlung 5 wird nach dem Durchtritt durch die Blendenöffnung 3 an einem in Fig. 3a,b nicht dargestellten Objekt reflektiert. Die zurück reflektierte Laserstrahlung 5a propagiert in einer zweiten, der ersten entgegen gesetzten Richtung R2 zurück zur Blende 1, wie in Fig. 3b zu erkennen ist.

In der Umgebung 6b der Blendenöffnung 1 ist an der zweiten Seite 2b der Blende 1 die Beschichtung 7 aufgebracht, auf welche die in der zweiten Richtung R2 propagierende Laserstrahlung 5a mit einem äußeren Randbereich ihres Strahlquerschnitts auftrifft und hierbei an dem Rand 8 der Blendenöffnung 3 Material der Blende 1, genauer gesagt der Beschichtung 7, verdampft, wobei die Plasmaschwelle $I_{P_2}$ überschritten wird, wodurch ein Plasma 9 gezündet wird. In dem Materialdampf wird zusätzliche Leistung der in der zweiten Richtung R2 propagierenden Laserstrahlung 5a absorbiert, so dass sich das Plasma 9 ausdehnt und schließlich die Blendenöffnung 3 bzw. den Apertur-Durchmesser d der Blende 1 verschließt, wie anhand von Fig. 2b und Fig. 2c zu erkennen ist.

Alternativ zur Zündung des Plasmas 9 durch die in der zweiten Richtung R2 propagierende Laserstrahlung 5a kann auch die in der ersten Richtung R1 propagierende Laserstrahlung 5 ein Plasma 9 zünden, wie in Fig. 4a,b gezeigt ist. Bei dem in Fig. 4a,b gezeigten Beispiel trifft die Laserstrahlung 5, die in der ersten Richtung R1 propagiert, auf den radial innen liegenden Rand der Beschichtung 7 bzw. die dort gebildete Kante und zündet ein Plasma 9. Um zu erreichen, dass die Laserstrahlung 5 auf die Beschichtung 7 trifft, ist es typischer Weise erforderlich, dass die Laserstrahlung 5 innerhalb der Blendenöffnung 3 fokussiert wird, so dass diese im Bereich des minimalen Durchmessers d der Blendenöffnung 3 divergent verläuft.

Die in der ersten Richtung R1 propagierende Laserstrahlung 5 verliert beim Auftreffen auf die Kante der Beschichtung 7 nur einen vergleichsweise geringen Anteil ihrer Leistung. Die Laserstrahlung 5 propagiert nach dem Durchlaufen der Blendenöffnung 3 in der ersten Richtung R1 hinter der Blende 1 weiter, trifft auf ein nicht bildlich dargestelltes Objekt und wird von diesem zur Blende 1 zurück reflektiert. Währenddessen breitet sich das Plasma 9 in der Blendenöffnung 3 aus, wie dies in Fig. 2c dargestellt ist. Die zur Blende 1 zurück reflektierte Laserstrahlung 5a wird daher beim Erreichen der Blende 1 von dem Plasma 9 nahezu vollständig absorbiert, so dass die zurück reflektierte Laserstrahlung 5a nicht durch die Blendenöffnung 3 hindurch treten kann, wie dies in Fig. 4b dargestellt ist.

Ob die Zündung des Plasmas 9 auf die in Zusammenhang mit Fig. 3a,b oder auf die im Zusammenhang mit Fig. 4a,b beschriebene Weise erfolgt, hängt von den Umgebungsbedingungen ab, beispielsweise vom Druck $p_1$, $p_2$ in der Umgebung der Blende 1, der bei den in Fig. 3a,b und Fig. 4a,b gezeigten Darstellungen unterschiedlich gewählt ist ($p_1 \neq p_2$) und der sich auf die Ausbreitungsgeschwindigkeit des Plasmas 9 auswirkt. Auch die Geometrie der Blendenöffnung 3, insbesondere deren Durchmesser, hat einen Einfluss darauf, auf welche der beiden weiter oben beschriebenen Arten an der Blende 1 ein Plasma 9 gezündet wird.

Nachfolgend wird anhand von **Fig. 5a**,b die Verwendung der Blende 1 bzw. eines optischen Isolators 10 mit einer solchen Blende 1 in einer EUV-Strahlungserzeugungsvorrichtung 11 beschrieben. Die EUV-Strahlungserzeugungsvorrichtung 11 weist eine Strahlquelle 12, eine Verstärkeranordnung 13 mit drei optischen Verstärkern 14a, 14b, 14c, eine nicht näher dargestellte Strahlführungseinrichtung 15 sowie eine Fokussieroptik 16 auf, die zur Vereinfachung der Darstellung als Fokussierlinse dargestellt ist, aber auch eines oder mehrere reflektierende optische Elemente aufweisen kann. Die Fokussieroptik 16 dient dazu, einen von der Strahlquelle 12 erzeugten und von der Verstärkeranordnung 13 verstärkten Laserpuls 5 (d.h. gepulste Laserstrahlung) an einem Zielbereich bzw. einer Zielposition T zu fokussieren, an der ein Target-Material 18 eingebracht ist. Das Target-Material 18 geht bei der Bestrahlung mit den Laserpulsen 5 in einen Plasma-Zustand über und emittiert EUV-Strahlung, die mittels eines Kollektorspiegels 19 fokussiert wird.

Bei dem in Fig. 5a,b gezeigten Beispiel weist der Kollektorspiegel 19 eine Öffnung zum Durchtritt der Laserpulse 5 auf und die Fokussieroptik 16 trennt eine Vakuum-Kammer 20, in der das Target-Material 18 angeordnet ist, von der Strahlführungseinrichtung 15. Die Strahlquelle 2 ist bei dem in Fig. 5a,b gezeigten Beispiel als $CO_2$-Laserquelle ausgebildet, d.h. die Laserpulse 5 weisen eine Wellenlänge $\lambda$ von ca. 10,6 $\mu$m auf. Die Strahlquelle 12 bildet gemeinsam mit der Verstärkeranordnung 13 eine Treiberlaseranordnung 22 der EUV-Strahlungserzeugungsvorrichtung 11.

Bei der in Fig. 5a,b gezeigten EUV-Strahlungserzeugungsvorrichtung 11 ist jeweils zwischen dem ersten und zweiten optischen Verstärker 14a, 14b ein optischer Isolator 10 angebracht, der die weiter oben beschriebene Blende 1 umfasst. Die Blende 1 des optischen Isolators 10 ist in einer Kammer 25 angeordnet, die ein Eintrittsfenster 26a zum Eintritt der Laserpulse bzw. der gepulsten Laserstrahlung 5 von dem ersten optischen Verstärker 14a in die Kammer 25 sowie ein Austrittsfenster 26b zum Austritt der gepulsten Laserstrahlung 5 aus der Kammer 25 und in den zweiten optischen Verstärker 14b aufweist. Es versteht sich, dass alternativ oder zusätzlich der bzw. ein weiterer optischer Isolator zwischen dem zweiten optischen Verstärker 14b und dem dritten optischen Verstärker 14c oder ggf. an anderer Stelle in der EUV-Strahlungserzeugungsvorrichtung 11 angeordnet sein kann.

Die kollimierte gepulste Laserstrahlung 5 wird bei dem in Fig. 5a gezeigten Beispiel von einer Fokussiereinrichtung 27 in Form einer ersten Linse auf einen Laserstrahlfokus 28 in der Blendenöffnung 3 der Blende 1 fokussiert. Die von dem Laserstrahlfokus 28 (Zwischenfokus) ausgehende Laserstrahlung 5 wird von einer Kollimationseinrichtung 29 in Form einer weiteren Linse kollimiert, bevor diese durch das Austrittsfenster 26b aus der Kammer 25 aus- und in den zweiten optischen Verstärker 14b eintritt. Die in der ersten Richtung R1 propagierende Laserstrahlung 5 trifft auf das an der Zielposition T angeordnete Target-Material 18 und ein Teil der auftreffenden Laserstrahlung 5 wird von diesem in der zweiten, der ersten entgegen gesetzten Richtung R2 zurück reflektiert, durchläuft die Strahlführungseinrichtung 15 und trifft erneut auf die Blende 1, genauer gesagt auf die zweite Seite 2b der Blende 1. Insbesondere bei dem in Fig. 4a,b gezeigten Beispiel, bei dem das Plasma 9 durch die in der ersten Richtung R1 propagierende Laserstrahlung 5 gezündet wird, ist es günstig, die Zeitdauer zum Aufbau der Plasmas 9 in der Blendenöffnung 3 mit der Propagationszeit der Laserstrahlung 5 von der Blende 1 zum Target-Material 18 und zurück abzustimmen. Für die Abstimmung kann insbesondere der minimale Durchmesser d der Blendenöffnung 3 geeignet gewählt werden.

Die EUV-Strahlungserzeugungsvorrichtungen 11 von Fig. 5a und Fig. 5b unterscheiden sich beispielsweise dadurch, dass bei der in Fig. 5b gezeigten EUV-Strahlungserzeugungsvorrichtung 11 sowohl die Fokussiereinrichtung 27 als auch die Kollimationseinrichtung 29 als Segmente von Paraboloidspiegeln ausgebildet sind, während in Fig. 5a zu diesem Zweck Linsen verwendet werden. Auf diese Weise kann auf die in Fig. 5a gezeigten Umlenkspiegel in der Kammer 25 verzichtet werden.

Bei der in Fig. 5a und der in Fig. 5b gezeigten EUV-Strahlungserzeugungsvorrichtung 11 ist die Kammer 25 jeweils mit einem Gaskreislauf 31 verbunden, der in der Kammer 25 eine definierte Gasatmosphäre erzeugt. Bei dem in Fig. 5a,b gezeigten Beispiel wird der Kammer 25 das Gas, beispielsweise Stickstoff, ggf. Helium oder Argon, an einer Eintrittsöffnung zugeführt und an einer Austrittsöffnung wieder aus der Kammer 25 abgeführt,. An Stelle einer Gasströmung, die im Wesentlichen parallel zur ersten Richtung R1 verläuft, wie dies in Fig. 5a,b gezeigt ist, kann das Gas in der Kammer 25 ggf. auch senkrecht zur ersten Richtung R1 verlaufen. Insbesondere kann das Gas ggf. über an der Blende 1 selbst gebildete Eintrittsöffnungen in die Kammer 25 eingeleitet werden. Der in Fig. 5a,b gezeigte Gaskreislauf 31 kann beispielsweise ein Turboradialgebläse mit Gaskühler aufweisen, um das aus der Kammer 25 ausströmende Gas, welches sich bei der Plasmabildung aufgrund der Absorption der Laserstrahlung 5 bzw. 5a erwärmt, vor der Rückführung in die Kammer 25 abzukühlen. Gegebenenfalls kann zusätzlich oder alternativ auch die Blende 1 selbst direkt aktiv und/oder passiv gekühlt werden, um die bei der Absorption der Laserstrahlung 5, 5a auftretende Wärme abzuführen.

Die Kammer 25 bzw. der Gaskreislauf 31 kann ggf. eine nicht bildlich dargestellte Druckregeleinrichtung aufweisen, um in der Kammer 25 einen Druck einzustellen, der eine Plasmabildung in der Kammer 25 begünstigt. Wird Stickstoff als Gas verwendet, kann der Druck in der Kammer 25 beispielsweise zwischen ca. 25 mbar und ca. 2 bar liegen. Gegebenenfalls kann die Kammer 25 evakuiert werden bzw. die Gasatmosphäre in der Kammer 25 kann nur einen sehr geringen Druck aufweisen, der im Wesentlichen durch das verdampfte Material der Blende 1 definiert wird. Auch in diesem Fall sind typischer Weise eine Austrittsöffnung zur Abführung des verdampften Materials der Blende 1 aus der Kammer 25 sowie eine Pumpe vorgesehen, es kann aber in der Regel auf eine Gasumwälzung und eine entsprechende Eintrittsöffnung in die Kammer 25 verzichtet werden.

Der optische Isolator 10 mit der Blende 1 kann auch in anderen optischen Systemen als in EUV-Strahlungserzeugungsvorrichtungen 11 zum Einsatz kommen, bei denen eine optische Isolation bzw. ein optischer Schalter erforderlich ist. Auch ist es für die Erzeugung des Plasmas 9 nicht erforderlich, Laserstrahlung 5, 5a mit der Wellenlänge eines $CO_2$-Lasers 12 zu verwenden, vielmehr kann auch Laserstrahlung 5, 5a, welche z.B. von einem Festkörperlaser erzeugt wird und eine geringere Wellenlänge $\lambda$ von beispielsweise 1,06 $\mu$m aufweist, an der Blende 1 ein Plasma 9 erzeugen, so dass diese als optischer Isolator 10 dienen kann.

**Patentansprüche**

1. Optischer Isolator (10), umfassend:

   eine Blende (1), die eine Blendenöffnung (3) zum Durchtritt von Laserstrahlung (5) aufweist, die in einer ersten Richtung (R1) durch die Blendenöffnung (3) tritt, wobei die Blende (1) zur Beeinflussung einer Plasmazündschwelle ($I_{P1}$, $I_{P2}$) für die Zündung eines Plasmas (9) ausgebildet ist, um den Durchtritt von Laserstrahlung (5a), die in einer zweiten, der ersten entgegen gesetzten Richtung (R2) propagiert, durch die Blendenöffnung (3) zu unterdrücken, wobei
   die Umgebung (6a, 6b) der Blendenöffnung (3), in der ein Strahlungsanteil aus dem Randbereich des Strahlprofils der Laserstrahlung (5) auf die Blende (3) trifft, an der ersten Seite (2a) der Blende (1), die einer Draufsicht auf die Blende (1) in einer Blickrichtung entlang der in der ersten Richtung (R1) propagierenden Laserstrahlung (5) parallel zur Längsachse (4) der Blende (1) entspricht, ein Material aufweist, das sich vom Material der Umgebung (6b) der Blendenöffnung (3) an der zweiten Seite (2b) der Blende (1), die einer Draufsicht auf die Blende (1) in einer Blickrichtung entlang der zweiten, der ersten entgegengesetzten Richtung (R2) parallel zur Längsachse (4) der Blende (1) entspricht, unterscheidet, so dass die Blende (1) hinsichtlich der Plasmazündschwelle ($I_{P1}$, $I_{P2}$) asymmetrisch ist und für Laserstrahlung (5, 5a), die in der Umgebung (6b) der Blendenöffnung (3) auf die zweite Seite (2b) der Blende (1) trifft, eine kleinere Plasmazündschwelle ($I_{P2} < I_{P1}$) aufweist als für Laserstrahlung (5), die unter gleichen Bedingungen, d.h. mit identischen Eigenschaften, in der Umgebung (6a) der Blendenöffnung (3) auf die erste Seite (2a) der Blende (1) trifft,
wobei eine Intensität der Laserstrahlung, die in der ersten Richtung propagiert und die durch die Blendenöffnung hindurch tritt, so klein gewählt ist, dass sich nur an der zweiten Seite der Blende ein Plasma bildet.

2. Optischer Isolator nach Anspruch 1, bei dem die Umgebung (6a) der Blendenöffnung (3) an der zweiten Seite (2b) der Blende (1) eine geringere Reflektivität ($R_2 < R_1$) für die Laserstrahlung (5, 5a) aufweist als die Umgebung (6a) der Blendenöffnung (3) an der ersten Seite (2a) der Blende (1).

3. Optischer Isolator nach Anspruch 1 , bei dem das Material der Umgebung (6b) der Blendenöffnung (3) an der zweiten Seite (2b) der Blende (1) eine kleinere Plasmazündschwelle ($I_{P2} < I_{P1}$) für die auftreffende Laserstrahlung (5a) aufweist als das Material der Umgebung (6b) der Blendenöffnung (3) an der ersten Seite (2a) der Blende (1).

4. Optischer Isolator nach Anspruch 3, bei dem die Umgebung (6b) der Blendenöffnung (3) an einer der beiden Seiten (2b) der Blende (1) eine Beschichtung (7) aus einem Material aufweist, das sich vom Material in der Umgebung (6a) der Blendenöffnung (3) an der anderen Seite (2a) der Blende (1) unterscheidet.

5. Optischer Isolator nach Anspruch 4, bei dem die Beschichtung (7) in der Umgebung (6b) der Blendenöffnung (7) an der zweiten Seite (2b) der Blende (1) gebildet ist und Graphit, ein Metall, bevorzugt Aluminium, Wolfram oder Molybdän, Edelstahl oder eine Keramik, bevorzugt Aluminiumoxid oder Kupferoxid, enthält.

6. Optischer Isolator nach einem der vorhergehenden Ansprüche, bei dem die Umgebung (6a) der Blendenöffnung (3) an der ersten Seite (2a) der Blende (1) eine Geometrie aufweist, die sich von der Geometrie der Umgebung (6b) der Blendenöffnung (3) an der zweiten Seite (2b) der Blende (1) unterscheidet.

7. Optischer Isolator nach einem der vorhergehenden Ansprüche, bei dem ein Rand (8) der Blendenöffnung (3) einen sich erweiternden Abschnitt (8a) aufweist, an dem der Durchmesser der Blendenöffnung (3) zur ersten Seite (2a) der Blende (1) hin zunimmt.

8. Optischer Isolator nach einem der vorhergehenden Ansprüche, bei dem sich ein Rand (8) der Blendenöffnung (3) an der zweiten Seite (2b) der Blende (1) ausgehend von einen minimalen Durchmesser (d) der Blendenöffnung (3) nicht erweitert.

9. Optischer Isolator nach Anspruch 7 und 8, bei dem sich an den minimalen Durchmesser (d) des Randes (8) der Blendenöffnung eine Verrundung (8b) anschließt, die in den sich erweiternden Abschnitt (8a) des Randes (8) der Blendenöffnung (3) übergeht.

10. Optischer Isolator nach einem der vorhergehenden Ansprüche, weiter umfassend:
eine Fokussiereinrichtung (27) zur Fokussierung der in der ersten Richtung (R1) propagierenden Laserstrahlung (5) auf einen Laserstrahlfokus (28), der im Bereich der Blendenöffnung (3) gebildet ist, sowie bevorzugt eine Kollimationseinrichtung (29) zur Kollimation der von dem Laserstrahlfokus (27) ausgehenden Laserstrahlung (5).

11. Optischer Isolator nach einem der vorhergehenden Ansprüche, weiter umfassend: eine Kammer (25), in der die Blende (1) angeordnet ist, ein Eintrittsfenster (26a) zum Eintritt der in der ersten Richtung (R1) propagierenden Laserstrahlung (5) in die Kammer (25) sowie ein Austrittsfenster (26b) zum Austritt der in der ersten Richtung (R1) propagierenden Laserstrahlung (5) aus der Kammer (25).

12. Treiberlaseranordnung (22) für eine EUV-Strahlungserzeugungsvorrichtung (11), umfassend:

eine Strahlquelle (12), die ausgebildet ist, Laserstrahlung (5) zu erzeugen, die in einer ersten Richtung (R1) propagiert,
eine Verstärkeranordnung (13) mit mindestens einem optischen Verstärker (14a-c) zur Verstärkung der Laserstrahlung (5), sowie
mindestens einen optischen Isolator (10) nach einem der vorhergehenden Ansprüche, bei dem die in der ersten Richtung (R1) propagierende Laserstrahlung (5) durch die Blendenöffnung (3) der Blende (1) hindurchtritt.

13. Treiberlaseranordnung (22) nach Anspruch 12, bei dem die Blende (1) zwischen zwei aufeinanderfolgenden optischen Verstärkern (14a, 14b) der Verstärkeranordnung (13) angeordnet ist.

14. EUV-Strahlungserzeugungsvorrichtung (11), umfassend:

eine Treiberlaseranordnung (22) nach einem der Ansprüche 12 oder 13,
eine Vakuum-Kammer (20), in der ein Target-Material (18) anordenbar ist, sowie eine Strahlführungseinrichtung (15) zur Führung der in der ersten Richtung (R1) propagierenden Laserstrahlung (5) von der Treiberlasereinrichtung (22) zu dem Target-Material (18).

**Claims**

1. Optical isolator (10) comprising:
   an aperture (1) which has an aperture opening (3) for the passage of laser radiation (5) which passes through the aperture opening (3) in a first direction (R1), wherein the aperture (1) is constructed to influence a plasma ignition threshold ($I_{P1}$, $I_{P2}$) for the ignition of a plasma (9) in order to suppress the passage of laser radiation (5a) which propagates in a second direction (R2) opposite the first direction through the aperture opening (3), wherein the environment (6a, 6b) of the aperture opening (3), in which a radiation portion from the edge region of the beam profile of the laser radiation (5) strikes the aperture (3), at the first side (2a) of the aperture (1), which corresponds to a plan view of the aperture (1) in a viewing direction along the laser radiation (5) which propagates in the first direction (R1) parallel with the longitudinal axis (4) of the aperture (1), has a material which differs from the material of the environment (6b) of the aperture opening (3) at the second side (2b) of the aperture (1), which corresponds to a plan view of the aperture (1) in a viewing direction in the second direction (R2) opposite the first direction parallel with the longitudinal axis (4) of the aperture (1) so that the aperture (1) is asymmetrical with respect to the plasma ignition threshold ($I_{P1}$, $I_{P2}$) and, for laser radiation (5, 5a) which strikes the second side (2b) of the aperture (1) in the environment (6b) of the aperture opening (3), has a smaller plasma ignition threshold ($I_{P2} < I_{P1}$) than for laser radiation (5) which under the same conditions, that is to say, with identical properties, strikes the first side (2a) of the aperture (1) in the environment (6a) of the aperture opening (3), wherein an intensity of the laser radiation which propagates in the first direction and which passes through the aperture opening is selected to be so small that a plasma is formed only at the second side of the aperture.

2. Optical isolator according to claim 1, wherein the environment (6a) of the aperture opening (3) has at the second side (2b) of the aperture (1) a lower reflectivity ($R_2 < R_1$) for the laser radiation (5, 5a) than the environment (6a) of the aperture opening (3) at the first side (2a) of the aperture (1).

3. Optical isolator according to claim 1, wherein the material of the environment (6b) of the aperture opening (3) at the second side (2b) of the aperture (1) has a smaller plasma ignition threshold ($I_{P2} < I_{P1}$) for the laser radiation (5a) which strikes than the material of the environment (6b) of the aperture opening (3) at the first side (2a) of the aperture (1).

4. Optical isolator according to claim 3, wherein the environment (6b) of the aperture opening (3) has at one of the two sides (2b) of the aperture (1) a coating (7) made of a material which differs from the material in the environment (6a) of the aperture opening (3) at the other side of the aperture (1).

5. Optical isolator according to claim 4, wherein the coating (7) is formed in the environment (6b) of the aperture opening (7) at the second side (2b) of the aperture (1) and contains graphite, a metal, preferably aluminium, tungsten or molybdenum, high-grade steel or a ceramic material, preferably aluminium oxide or copper oxide.

6. Optical isolator according to any one of the preceding claims, wherein the environment (6a) of the aperture opening (3) at the first side (2a) of the aperture (1) has a geometry which differs from the geometry of the environment (6b) of the aperture opening (3) at the second side (2b) of the aperture (1).

7. Optical isolator according to any one of the preceding claims, wherein an edge (8) of the aperture opening (3) has an expanding portion (8a) at which the diameter of the aperture opening (3) increases in the direction towards the first side (2a) of the aperture (1).

8. Optical isolator according to any one of the preceding claims, wherein an edge (8) of the aperture opening (3) does not expand at the second side (2b) of the aperture (1) starting from a minimum diameter (d) of the aperture opening (3) .

9. Optical isolator according to claim 7 and 8, wherein the minimum diameter (d) of the edge (8) of the aperture opening is adjoined by a rounded portion (8b) which merges into the expanding portion (8a) of the edge (8) of the aperture opening (3).

10. Optical isolator according to any one of the preceding claims, further comprising:
a focusing device (27) for focusing the laser radiation (5) which propagates in the first direction (R1) onto a laser beam focal point (28) which is formed in the region of the aperture opening (3) and preferably a collimation device (29) for collimation of the laser radiation (5) which is discharged from the laser beam focal point (27).

11. Optical isolator according to any one of the preceding claims, further comprising: a chamber (25) in which the aperture (1) is arranged, an inlet opening (26a) for introducing the laser radiation (5) which propagates in the first direction (R1) into the chamber (25) and an outlet opening (26b) for discharging the laser radiation (5) which propagates in the first direction (R1) from the chamber (25).

12. Driver laser arrangement for an EUV radiation generation apparatus (11), comprising:

a beam source (12) which is constructed to generate laser radiation (5) which propagates in a first direction (R1),
an amplifier arrangement (13) having at least one optical amplifier (14a-c) for amplifying the laser radiation (5), and
at least one optical isolator (10) according to any one of the preceding claims, in which the laser radiation which propagates in the first direction (R1) passes through the aperture opening (3) of the aperture (1).

13. Driver laser arrangement (22) according to claim 12, wherein the aperture (1) is arranged between two sequential optical amplifiers (14a, 14b) of the amplifier arrangement (13) .

14. EUV radiation generation apparatus (11) comprising:

a driver laser arrangement (22) according to either claim 12 or 13,
a vacuum chamber (20) in which a target material (18) can be arranged, and a beam guiding device (15) for guiding the laser radiation (5) which propagates in the first direction (R1) from the driver laser device (22) to the target material (18) .

**Revendications**

1. Isolateur optique (10), comprenant :

un diaphragme (1) qui présente une ouverture de diaphragme (3) pour le passage d'un rayonnement laser (5) qui passe à travers l'ouverture de diaphragme (3) dans une première direction (R1), le diaphragme (1) étant conçu pour influencer un seuil d'allumage de plasma ($Ip_1$, $Ip_2$) pour l'allumage d'un plasma (9) afin d'empêcher le passage d'un rayonnement laser (5a) qui se propage dans une deuxième direction (R2), opposée à la première, à travers l'ouverture de diaphragme (3),
dans lequel le voisinage (6a, 6b) de l'ouverture de diaphragme (3) dans lequel une fraction de rayonnement provenant de la zone marginale du profil de faisceau du rayonnement laser (5) atteint le diaphragme (3), sur le premier côté (2a) du diaphragme (1) qui correspond à une vue de dessus du diaphragme (1) dans une direction d'observation le long du rayonnement laser (5) se propageant dans la première direction (R1) parallèlement à l'axe longitudinal (4) du diaphragme (1), présente un matériau qui diffère du matériau du voisinage (6b) de l'ouverture de diaphragme (3) sur le deuxième côté (2b) du diaphragme (1) qui correspond à une vue de dessus du diaphragme (1) dans une direction d'observation le long de la deuxième direction (R2) opposée à la première, parallèlement à l'axe longitudinal (4) du diaphragme (1), de sorte que le diaphragme (1) est asymétrique en ce qui concerne le seuil d'allumage de plasma ($Ip_1$, $Ip_2$) et qu'il présente, pour un rayonnement laser (5, 5a) qui atteint le deuxième côté (2b) du diaphragme (1) au voisinage (6b) de l'ouverture de diaphragme (3), un seuil d'allumage de plasma plus petit ($Ip_2 < Ip_1$) que pour un rayonnement laser (5) qui, dans les mêmes conditions, c'est-à-dire ayant des propriétés identiques, atteint le premier côté (2a) du diaphragme (1) au voisinage (6a) de l'ouverture de diaphragme (3),

dans lequel une intensité du rayonnement laser qui se propage dans la première direction et qui passe à travers l'ouverture du diaphragme est choisie suffisamment faible pour qu'un plasma ne se forme que sur le deuxième côté du diaphragme.

2. Isolateur optique selon la revendication 1, dans lequel le voisinage (6a) de l'ouverture de diaphragme (3) sur le deuxième côté (2b) du diaphragme (1) présente une réflectivité plus faible ($R_2 < R_1$) pour le rayonnement laser (5, 5a) que le voisinage (6a) de l'ouverture de diaphragme (3) sur le premier côté (2a) du diaphragme (1).

3. Isolateur optique selon la revendication 1, dans lequel le matériau du voisinage (6b) de l'ouverture de diaphragme (3) sur le deuxième côté (2b) du diaphragme (1) présente un seuil d'allumage de plasma plus petit ($Ip_2 < I_{P1}$) pour le rayonnement laser incident (5a) que le matériau du voisinage (6b) de l'ouverture de diaphragme (3) sur le premier côté (2a) du diaphragme (1).

4. Isolateur optique selon la revendication 3, dans lequel le voisinage (6b) de l'ouverture de diaphragme (3) sur l'un des deux côtés (2b) du diaphragme (1) présente un revêtement (7) constitué d'un matériau qui diffère du matériau au voisinage (6a) de l'ouverture de diaphragme (3) sur l'autre côté (2a) du diaphragme (1).

5. Isolateur optique selon la revendication 4, dans lequel le revêtement (7) est formé au voisinage (6b) de l'ouverture de diaphragme (7) sur le deuxième côté (2b) du diaphragme (1) et contient du graphite, un métal, de préférence de l'aluminium, du tungstène ou du molybdène, de l'acier inoxydable ou une céramique, de préférence de l'oxyde d'aluminium ou de l'oxyde de cuivre.

6. Isolateur optique selon l'une des revendications précédentes, dans lequel le voisinage (6a) de l'ouverture de diaphragme (3) sur le premier côté (2a) du diaphragme (1) présente une géométrie qui diffère de la géométrie du voisinage (6b) de l'ouverture de diaphragme (3) sur le deuxième côté (2b) du diaphragme (1).

7. Isolateur optique selon l'une des revendications précédentes, dans lequel un bord (8) de l'ouverture de diaphragme (3) présente une partie qui s'élargit (8a) au niveau de laquelle le diamètre de l'ouverture de diaphragme (3) augmente en direction du premier côté (2a) du diaphragme (1).

8. Isolateur optique selon l'une des revendications précédentes, dans lequel un bord (8) de l'ouverture de diaphragme (3) sur le deuxième côté (2b) du diaphragme (1) ne s'élargit pas à partir d'un diamètre minimal (d) de l'ouverture de diaphragme (3).

9. Isolateur optique selon les revendications 7 et 8, dans lequel le diamètre minimal (d) du bord (8) de l'ouverture de diaphragme est suivi d'un arrondi (8b) qui se prolonge par la partie qui s'élargit (8a) du bord (8) de l'ouverture de diaphragme (3).

10. Isolateur optique selon l'une des revendications précédentes, comprenant en outre :
un moyen de focalisation (27) pour focaliser le rayonnement laser (5) se propageant dans la première direction (R1) sur un foyer de faisceau laser (28) qui est formé dans la zone de l'ouverture de diaphragme (3), ainsi que, de préférence, un moyen de collimation (29) pour collimater le rayonnement laser (5) provenant du foyer de faisceau laser (27).

11. Isolateur optique selon l'une des revendications précédentes, comprenant en outre :
une chambre (25) dans laquelle est disposé le diaphragme (1), une fenêtre d'entrée (26a) pour l'entrée dans la chambre (25) du rayonnement laser (5) se propageant dans la première direction (R1) ainsi qu'une fenêtre de sortie (26b) pour la sortie de la chambre (25) du rayonnement laser (5) se propageant dans la première direction (R1).

12. Ensemble laser excitateur (22) pour un dispositif de génération de rayonnement EUV (11), comprenant :

une source de rayonnement (12) qui est conçue pour générer un rayonnement laser (5) qui se propage dans une première direction (R1),
un ensemble amplificateur (13) comportant au moins un amplificateur optique (14a-c) pour amplifier le rayonnement laser (5) et
au moins un isolateur optique (10) selon l'une des revendications précédentes, dans lequel le rayonnement laser (5) se propageant dans la première direction (R1) passe à travers l'ouverture de diaphragme (3) du diaphragme (1).

**13.** Ensemble laser excitateur (22) selon la revendication 12, dans lequel le diaphragme (1) est disposé entre deux amplificateurs optiques successifs (14a, 14b) de l'ensemble amplificateur (13).

**14.** Dispositif de génération de rayonnement EUV (11), comprenant :
un ensemble laser excitateur (22) selon l'une des revendications 12 ou 13, une chambre à vide (20) dans laquelle un matériau cible (18) peut être disposé, ainsi qu'un dispositif de guidage de faisceau (15) pour guider le rayonnement laser (5) se propageant dans la première direction (R1) de l'ensemble laser excitateur (22) vers le matériau cible (18).

Fig. 1a

Fig. 1b

Fig. 2a

Fig. 2b

Fig. 2c

Fig. 3a

Fig. 3b

Fig. 4a

Fig. 4b

Fig. 5a

Fig. 5b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2015082004 A1
- WO 2015045102 A1
- US 20150208494 A1
- US 4194813 A

### In der Beschreibung aufgeführte Nicht-Patentliteratur

- **T.W. SHEHEEN et al.** *J. Appl. Phys.,* 1982, vol. 53, 4652-4656
- **VON A.I. BARCHUKOV et al.** Investigation of low-threshold gas breakdown near solid targets by CO2 laser radiation. *Sov. Phys.-JETP,* September 1974, vol. 39 (3
- **VON J.E. MURRAY et al.** Spatial filter pinhole development for the National Ignition Facility. *Applied Optics,* Marz 2000, vol. 39 (9), 1405-1420
- Spatial Filter Issues. **J.E. MURRAY et al.** Second International Conference on Solid State Lasers for Application to ICF. International Society for Optics and Photonics, 1997
- **G.A. HILL et al.** Breakdown thresholds in rare and molecular gases using pulsed 10.6 μm radiation. *Journal of Physics D,* 1972, vol. 5 (11